# EUROPÄISCHE PATENTSCHRIFT

(11) **EP 3 913 347 B1**
(45) Veröffentlichungstag und Bekanntmachung des Hinweises auf die Patenterteilung: **20.11.2024**
(21) Anmeldenummer: 21172562.7
(22) Anmeldetag: 06.05.2021
(51) Int. Cl.: G01M 5/00, G01B 7/16, G01L 1/14, G01L 9/00

(54) **VERWENDUNG EINER MESSVORRICHTUNG ZUR ERFASSUNG DER DEHNUNG EINES ELASTOMEREN SCHLAUCHES**
USE OF A MEASURING DEVICE FOR DETECTING STRAIN IN AN ELASTOMERIC HOSE
UTILISATION D'UN DISPOSITIF DE MESURE POUR DÉTECTER LA DÉFORMATION D'UN TUYAU EN ÉLASTOMÈRE

(30) Priorität: 20.05.2020 DE 102020206313
(43) Veröffentlichungstag der Anmeldung: 24.11.2021
(73) Patentinhaber: ContiTech Techno-Chemie GmbH, 61184 Karben (DE)
(72) Erfinder: Linzmaier, Markus, 30419 Hannover (DE); Kiel, Christian, 30419 Hannover (DE); Daniel, Gunther, 30419 Hannover (DE)
(74) Vertreter: Continental Corporation

(56) Entgegenhaltungen:
- WO-A1-2016/149197
- NEWELL BRITTANY ET AL: "Industrial capacitance sensors and actuators", 2016 FUTURE TECHNOLOGIES CONFERENCE (FTC), IEEE, 6 December 2016 (2016-12-06), pages 450 - 457, XP033044453, DOI: 10.1109/FTC.2016.7821647

## Beschreibung

Die Erfindung betrifft eine Verwendung einer Messvorrichtung zur Erfassung der Dehnung eines zu sensierenden, elastomeren Schlauches während des Betriebs in situ.

Elastomere Schläuche sind in vielen Einsatzgebieten bei unterschiedlichen Temperaturen und Drücken seit langem verbreitet. Derartige Schläuche unterliegen einem Verschleiß und einer Alterung, was erforderlich macht, dass die Schläuche überwacht werden, damit ein vorbeugender Austausch zur Sicherheit möglich wird.

Zur Bestimmung der Alterung oder des Verschleißes dient dabei meist der Durchmesser des Schlauches, der sich bei bekannten Betriebsbedingungen, wie Druck und Temperatur, mit zunehmendem Verschleiß oder Alter vergrößert. Diese Durchmesser Änderung, die eine radialen Dehnung des Schlauches entspricht, ist mit vorbestimmten Kennwerten vergleichbar, sodass ein entsprechender Grenzwert definierbar ist.

Zur Erfassung der Schlauchdurchmesser werden in der Automobilindustrie beispielsweise externe formschlüssige Drucksensoren wie ohmsche Widerstände verwendet, welche aufwendig in die Leitungsgeometrie eingesetzt werden müssen. Die Schlauchexpansion kann im Prüfstand auch mit einem Maßband oder einer Lehre erfasst werden. Die üblichen Dehnungsmessstreifen sind für viskoelastische Materialien, wie sie für Schlauchleitungssysteme eingesetzt werden, nicht geeignet. Die Dehnungsmessung an elastomeren Strukturen lässt sich grob in zwei Gruppen einteilen. Die erste Gruppe umfasst diejenigen Geräte, bei denen die Längen- oder Durchmesseränderung des sich ausdehnenden Körpers über mechanische Glieder, beispielsweise Hebelarme, unmittelbar auf ein Zeigewerk übertragen wird. Statt der unmittelbaren Übertragung sind auch elektrische Zwischenglieder bekannt, die den Gebrauch elektrischer Anzeigegeräte ermöglichen.

Die zweite Gruppe der bekannten Geräte arbeitet nach dem Druckmessprinzip, d.h., die Längenänderung wird zuerst in eine proportionale Druckänderung eines Tastgliedes übertragen und diese Druckänderung gelangt dann zur Messung bzw. Anzeige oder Aufzeichnung.

Allen diesen Geräten haftet als großer Nachteil an, dass ein verhältnismäßig großer Aufwand an Zwischengliedern erforderlich ist, wobei diese Zwischenglieder meistens für ein eng begrenztes Anwendungsgebiet ausgebildet sind und daher keine allgemeine Anwendung, insbesondere auch während des Betriebs der Schläuche, gestatten.

Es sind daher Messmethoden entwickelt worden, bei denen Längen- bzw. Ausdehnungsänderungen unterworfene elastische elektrische Leiter zum Einsatz kommen, bei denen durch das jeweilige Verhältnis von Länge zu Querschnitt elektrische Widerstandswerte gegeben sind, die sich bei Dehnung verändern und mit einer bekannten Widerstandsmesseinrichtung erfassbar sind.

In der DE 15 11 806 U wird eine derartige Möglichkeit vorgeschlagen, bei der der elektrische Leiter als fluidgefüllter Schlauch für die Messung besonders großer Dehnungen einsetzbar ist.

In der DE 35 44 894 C1 wird die letztgenannte Idee aufgegriffen und ein Messwertaufnehmer offenbart, der als quecksilbergefüllter Schlauch ausgebildet ist, wobei der Schlauch schleifenförmig in einem hochelastischen Körper allseitig eingebettet und mit dem zu messenden Objekt fest verbunden ist.

Auch in der DE 40 32 152 A1 kommt ein elektrischer Widerstand zur Messung der Ausdehnung eines elastischen Gegenstandes zum Einsatz, der in diesem Falle dazu dient, die Durchmesseränderung eines menschlichen Oberschenkels zu erfassen. Hier wird ebenfalls wird die Widerstandsänderung eines um den Oberschenkel herum geschlungenen, mit einem leitfähigen Fluid gefüllten Schlauches als Messsignal verwendet.

Bei allen diesen aufgezeigten Möglichkeiten besteht die Schwierigkeit, dass die genannten Sensoren einerseits selbst recht aufwendig und teuer, in ihrer Dehnbarkeit deutlich begrenzt oder nur mit nicht unerheblichen Aufwand zu applizieren sind. Damit scheidet ein sinnvoller Einsatz der bekannten Möglichkeiten bei der in situ Überwachung von Schläuchen während des Betriebseinsatzes aus.

In einer Veröffentlichung der Zeitschrift PLUS, Leuze Verlag KG, Bad Saulgau, Nr. 6, 2018, Seiten 1037 - 1039 von Brunner, B & J. Ziegler, "Dehnbare Sensoren und Leiter für 3-dimensionale Gebilde" werden Dehnungs- und Drucksensoren auf Basis dehnbarer dielektrischer Elastomersensoren vorgeschlagen, die mit einer Veränderung ihrer elektrischen Kapazität auf Dehnungen oder Druck reagieren, wobei auch hohe Dehnungen ohne Zerstörung der Sensoren möglich sind. NEWELL BRITTANY ET AL: "Industrial capacitance sensors and actuators",2016 FUTURE TECHNOLOGIES CONFERENCE (FTC), IEEE, 6. Dezember 2016 (2016-12-06), Seiten 450-457, offenbart einen kapazitiv messenden Sensorschlauch.

Der Erfindung liegt die Aufgabe zugrunde, eine Verwendung einer Messvorrichtung zur Erfassung von Durchmesserveränderungen an Schläuchen auch während des Betriebs in situ zu schaffen, die hohe Dehnungen bei leichter Anwendbarkeit und zuverlässiger Signalabgabe ermöglicht.

Diese Aufgabe wird durch Verwendung einer Messvorrichtung zur Erfassung der Dehnung eines zu sensierenden, elastomeren Schlauches während des Betriebs in situ, wie in Anspruch 1 definiert.

Die Ausbildung eines flexiblen Sensorrings aus dielektrischen Elastomersensoren ermöglicht eine einfache Applikation auf den zu sensierenden Schläuchen. Durch die vorbestimmte Vorspannung sitzt der Sensorring fest und ohne Spiel auf dem Schlauch und folgt durch seine eigene Elastizität den Dehnungen des Schlauches sowohl in radialer als auch in axialer Richtung zu mindestens teilweise durch Veränderung seiner Breite.

Die Kalibrierung der Messvorrichtung erfolgt durch Messung der elektrischen Kapazität des Sensors beim Neuzustand des Schlauches. Veränderungen der Kapazität des Sensors lassen sich danach im Betrieb kontinuierlich mit vorbestimmten Grenzwerten abgleichen. Bei Überschreitung der Grenzwerte kann dann eine entsprechendes Alarmsignal ausgegeben werden.

Da wegen der Vorspannung des Ringes auf dem Schlauch eine weitere Befestigung, wie beispielsweise Verklebung o. ä. entfallen kann, ist der Sensorring bei erforderlichem Austausch des Schlauches problemlos wiederverwendbar.

Erfindungsgemäß ist der Sensorring aus einem elastomeren Grundmaterial aufgebaut, in das die dielektrischen Elastomersensoren eingebettet sind.

Die Einbettung der Elastomersensoren in ein elastomeres Grundmaterial sorgt für einen guten Schutz der Sensoren und ermöglicht den Einsatz auch unter schwierigen Umgebungsbedingungen.

In einer Weiterbildung der Erfindung ist das elastomere Grundmaterial aus hochtemperaturfesten Elastomeren ausgebildet.

Mit dieser Lösung ist die erfindungsgemäße Vorrichtung auch im Hochtemperaturbereich einsetzbar.

Anhand der Zeichnung wird nachstehend ein Beispiel der Erfindung näher erläutert. Es zeigt
Fig. 1 eine perspektivische Draufsicht der Erfindung gemessen Vorrichtung und
Fig. 2 eine Ausschnittvergrößerung eines Querschnitts der Erfindung gemessen Vorrichtung.

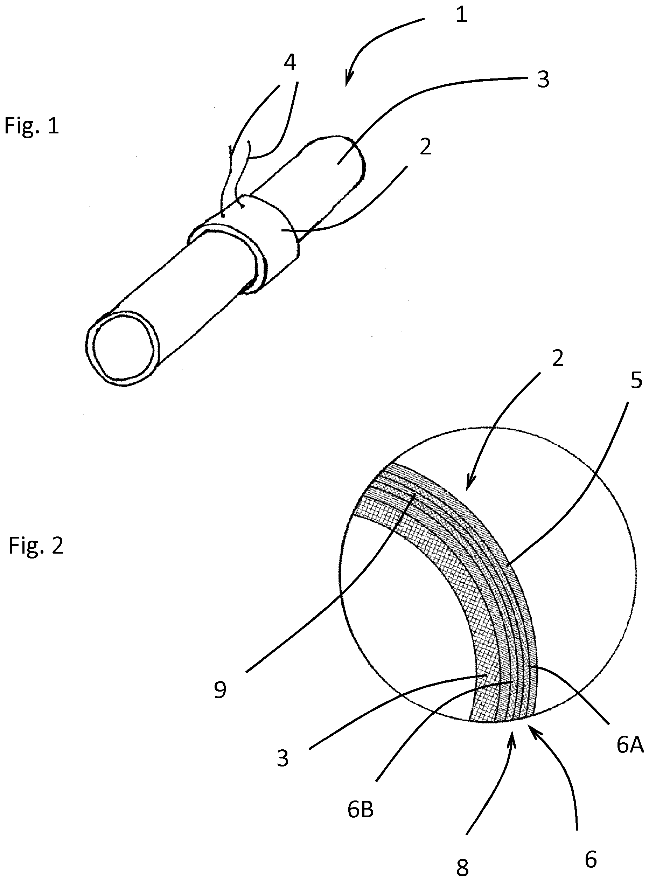

In der Fig. 1 ist eine erfindungsgemäße Vorrichtung 1 in einer prinzipiellen Ausbildung als perspektivische Draufsicht gezeigt. Ein flexibler Sensorring 2 ist auf einem Schlauch 3 aus elastomerem Material aufgezogen, wobei der flexible Sensorring 2 seinerseits elastisch ist und unter einer vorbestimmten Vorspannung auf dem Schlauch 3 festsitzt.

Der Sensorring 2 weist zwei elektrische Anschlüsse 4 auf, die mit einer hier nicht gezeigten Auswerteeinheit verbindbar sind.

In der Fig. 2 ist ein Teilausschnitt eines Querschnitts der erfindungsgemäßen Vorrichtung 1 gezeigt. Der auf dem Schlauch 3 aufgezogene flexible Sensorring 2 ist aus einem elastomeren Grundwerkstoff 5 ausgebildet. Ein dielektrischer Elastomersensor 6 ist in den elastomeren Grundwerkstoff 5 des Sensorrings 2 eingebettet, wobei der dielektrische Elastomersensor 6 aus zwei Teilen 6A und 6B ausgebildet ist. Die Teile 6A und 6B des Elastomersensors 6 sind in radialer Richtung voneinander beabstandet, wobei in dem sich dadurch bildenden Spalt 8 ein ebenfalls elastomerer Werkstoff als Dielektrikum 9 angeordnet ist, wobei der Werkstoff des Dielektrikums 9 mit dem elastischen Grundmaterial 5 identisch sein kann.

Die beiden Teile 6 und 6B des Elastomersensors 6 sind, hier nicht sichtbar, mit den elektrischen Anschlüssen 4 der Vorrichtung 1 leitend verbunden und aufgrund ihrer Materialausbildung selbst elastisch verformbar und wirken bei einer angelegten elektrischen Spannung wie die Elektroden eines Kondensators, dessen Kapazität durch die verwendeten Materialien und Geometrien vorbestimmbar und bei Verformung veränderbar ist.

Im Neuzustand des unbelasteten Schlauches 3 lässt sich so eine Anfangskapazität des als Kondensator wirkenden Sensorrings 2 bestimmen. Bei Veränderungen der Belastung des Schlauches 3 ändert sich dabei analog auch die Kapazität des Sensorrings 2 mit dem eingebetteten Elastomersensor 6, die kontinuierlich messbar und mit vorbestimmten Grenzwerten in der nicht gezeigten Auswerteeinheit vergleichbar ist.

Werden dabei einer oder mehrere vorbestimmte Grenzwerte erreicht oder überschritten, ist daraus eine unzulässige Belastung des Schlauches 3, sei es durch Überbelastung oder fortgeschrittene Alterung, ablesbar.

Wird der Schlauch 3 ausgetauscht, ist der Sensorring 2 vom Schlauch 3 abziehbar und erneut an einem neuen Schlauch einsetzbar.

### Bezugszeichenliste

### (Teil der Beschreibung)

- 1: Messvorrichtung
- 2: Sensorring
- 3: Schlauch
- 4: Elektrische Anschlüsse des Semsorrings 2
- 5: Grundwerkstoff des Sensorrings 2
- 6: dielektrischer Elastomersensor
- 6A, 6B: Teile des dielektrischen Elastomersensors 6
- 8: Spalt zwischen den Teilen 6A und 6B
- 9: Dielektrikum

## Patentansprüche

1. Verwendung einer Messvorrichtung (1) zur Erfassung der Dehnung eines zu sensierenden, elastomeren Schlauches (3) während des Betriebs in situ, wobei die Vorrichtung (1) mindestens einen flexiblen Sensorring (2) aufweist, der unter radialer Vorspannung auf den zu sensierenden Schlauch (3) wieder abziehbar aufgezogen ist, wobei der Sensorring (2) eine vorbestimmte axiale Ausdehnung und einen vorbestimmten Innendurchmesser aufweist, wobei der Sensorring (2) aus einem elastomeren Grundmaterial (5) aufgebaut ist, in das ein dielektrischer Elastomersensor (6) eingebettet ist, wobei der dielektrische Elastomersensor (6) aus zwei in radialer Richtung voneinander beabstandeten Teilen (6A, 6B) ausgebildet ist, wobei in dem sich dadurch bildenden Spalt (8) ein ebenfalls elastomerer Werkstoff als Dielektrikum (9) angeordnet ist, wobei die Teile (6A, 6B) bei einer angelegten elektrischen Spannung wie die Elektroden eines Kondensators wirken, dessen Kapazität bei Verformung des Schlauches (3) veränderbar ist.

## Claims

1. Use of a measuring device (1) for checking in situ during operation the extension under strain of an elastomeric hose (3) to be checked by sensors, wherein the device (1) has at least one flexible sensor ring (2), which, while under radial prestress, has been pulled onto the hose (3) to be checked by sensors such that it can be pulled off again,
wherein the sensor ring (2) has a predetermined axial extent and a predetermined inner diameter, wherein the sensor ring (2) is made up of an elastomeric base material (5), in which a dielectric elastomer sensor (6) is embedded, wherein the dielectric elastomer sensor (6) is formed by two parts (6A, 6B) spaced apart from each other in the radial direction, wherein in the gap (8) forming as a result a likewise elastomeric material is arranged as a dielectric (9), wherein, when an electrical voltage is applied, the parts (6A, 6B) act like the electrodes of a capacitor of variable capacitance in response to deformation of the hose (3).

## Revendications

1. Utilisation d'un dispositif de mesure (1) pour détecter l'allongement d'un tuyau en élastomère (3) qui doit être soumis à une détection pendant le fonctionnement in situ, le dispositif (1) comportant au moins un anneau de détection flexible (2) qui est enfilé de manière à pouvoir être retiré sous précontrainte radiale sur le tuyau (3) qui doit être soumis à une détection,
l'anneau de détection (2) présentant une extension axiale prédéterminée et un diamètre intérieur prédéterminé, l'anneau de détection (2) étant constitué d'un matériau de base élastomère (5) dans lequel est incorporé un capteur en élastomère diélectrique (6), le capteur en élastomère diélectrique (6) étant formé de deux parties (6A, 6B) espacées l'une de l'autre dans la direction radiale, un matériau également élastomère étant disposé en tant que diélectrique (9) dans la fente (8) se formant ainsi, les parties (6A, 6B) agissant, lors de l'application d'une tension électrique, comme les électrodes d'un condensateur dont la capacité est modifiable lors de la déformation du tuyau flexible (3).
